# FASCICULE DE BREVET EUROPEEN

(11) **EP 3 063 419 B1**
(45) Date de publication et mention de la délivrance du brevet: **06.03.2019**
(21) Numéro de dépôt: 14828188.4
(22) Date de dépôt: 22.10.2014
(51) Int. Cl.: F16B 39/24

(54) **BAGUE ANTI-DESSERRAGE D'UN ECROU**
GEGEN ABLÖSUNG GESICHERTER RING FÜR EINE MUTTER
ANTI-LOOSENING RING FOR A NUT

(30) Priorité: 29.10.2013 FR 1360579
(43) Date de publication de la demande: 07.09.2016
(73) Titulaire: Bacacier 3S, 63118 Cebazat (FR)
(72) Inventeur: FAISANDIER, Julien, F-63110 Beaumont (FR)
(74) Mandataire: Dennemeyer & Associates S.A.
(86) Numéro de dépôt international: PCT/FR2014/052682
(87) Numéro de publication internationale: WO 2015/063391

(56) Documents cités:
- DE-C1- 4 433 470
- GB-A- 538 426
- US-A- 1 896 679
- US-A- 2 344 102
- US-A- 3 156 281

## Description

La présente invention concerne une bague anti-desserrage d'un écrou.

Par bague on désigne ici une pièce présentant un orifice traversant central dont les dimensions sont voisines des dimensions de la pièce, la partie pleine de la pièce n'occupant qu'une faible partie de la pièce, quelle que soit la forme de la partie pleine et/ou de l'orifice. Une telle bague, également dénommée rondelle lorsqu'elle est en forme de disque percé, est utilisée, de manière courante, dans une liaison de type vissage destinée à maintenir en une configuration donnée au moins un élément, que cet élément soit maintenu contre un autre élément, identique ou non, ou sur une structure porteuse, La bague est, généralement, positionnée entre un élément à maintenir et un écrou, ce dernier étant vissé sur une tige filetée. La bague permet de répartir les efforts de serrage tout en évitant un frottement direct entre l'élément à maintenir et l'écrou.

Lorsque les éléments reliés par vissage sont soumis à des contraintes mécaniques telles que, par exemple, des vibrations et/ou des dilatations thermiques, un desserrage de la liaison peut se produire. Dans ce cas, la bague non seulement ne joue plus son rôle initial mais peut participer également à amplifier le desserrage de la liaison en favorisant le dévissage de l'écrou, Pour remédier à cela, on connait divers dispositifs limitant ou évitant le dévissage de l'écrou par rapport à la tige filetée.

On connait des bagues circulaires dont au moins une, avantageusement les deux faces sont crantées, les crans étant de forme triangulaire. Les hypoténuses des crans sont orientées selon une direction permettant le vissage d'un écrou qui est également pourvu sur une face de crans similaires à ceux de la bague et qui ont leurs hypoténuses disposées selon la même direction. Ainsi, lorsque l'on veut dévisser l'écrou, les crans de la bague et de l'écrou sont en butée mutuelle et s'opposent au mouvement de dévissage. L'autre face de la bague, qui est également pourvue de crans, est en prise avec un élément à maintenir, limitant ainsi la rotation de la bague. Un tel dispositif est un dispositif empêchant tout dévissage de l'écrou une fois l'écrou vissé. Les crans de la
bague en prise avec l'élément à maintenir peuvent endommager ce dernier. De plus, une telle solution n'est utilisable qu'avec seulement des bagues en forme de disque circulaire. On connait également par DE-A-425 569 une rondelle de blocage dont les bords forment des retours enserrant l'élément à maintenir. Ici, les dimensions externes de la rondelle sont adaptées à celles de l'élément à maintenir.

WO-A-2004 067 973 divulgue un dispositif mettant en oeuvre deux rondelles de configuration géométrique définie, une rondelle ayant une partie hémisphérique. Un ressort hélicoïdal disposé entre la partie hémisphérique d'une rondelle et l'autre rondelle permet de maintenir écartées les rondelles et donc évite le desserrage des éléments constitutifs de la liaison, du fait du maintien d'une distance donnée entre les éléments, typiquement entre un écrou et un élément à maintenir. Cette solution est également décrite avec des bagues en forme de disque circulaire. Si elle semble pouvoir être employée avec des bagues non circulaires, elle reste complexe à mettre en oeuvre du fait du nombre de pièces utilisées et de la configuration des rondelles.

L'invention vise plus particulièrement à remédier à ces inconvénients en proposant une bague anti-desserrage d'un écrou aisée à fabriquer et à utiliser, tout en permettant si besoin de dévisser l'écrou afin de désolidariser les éléments reliés.

A cet effet, l'invention a pour objet une bague anti-desserrage selon la revendication 1.
Une telle bague assure de manière simple un maintien du serrage d'un écrou vissé sur une tige filetée, avec un couple de serrage défini ce qui permet, de facto, de pouvoir dévisser l'écrou en appliquant un couple de desserrage supérieur au couple de serrage. En d'autres termes, le vissage de l'écrou sur la tige filetée est réversible, cela indépendamment de l'élément à maintenir.

Selon des aspects avantageux mais non obligatoires de l'invention, une telle bague peut comprendre une ou plusieurs des caractéristiques suivantes:
- Elle comprend deux organes de blocage en position de la bague formés par deux voiles s'étendant en direction de l'élément à maintenir ou de la structure porteuse.
- Les voiles sont parallèles entre eux et s'étendent perpendiculairement à la seconde face de la partie pleine de la bague.
- Le au moins un organe de blocage en position de la bague est formé par un voile continu, définissant une cheminé et s'étendant en direction de l'élément à maintenir ou de la structure porteuse.
- Le ou les crochet(s) du ou de chaque voile est ou sont orienté(s) vers l'extérieur de la bague.
- Les organes de maintien sont formés par deux pattes, en regard l'une de l'autre, solidarisées par un bord à une face de deux côtés parallèles de la partie pleine de la bague.
- Le bord de la patte est monobloc avec la partie pleine de la bague, la patte étant réalisée par découpage.
- La patte est rapportée, par exemple par collage ou soudage, sur la face de la partie pleine de la bague.
- La distance entre la face de la partie pleine de la bague et l'extrémité libre de chaque patte est modifiable par pliage de la patte.
- La distance entre la face de la partie pleine de la bague et l'extrémité libre de chaque patte correspond au moins à l'épaisseur de la partie pleine de la bague.

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence aux dessins suivants dans lesquels:
- La figure 1 est une vue en perspective d'une bague conforme à un mode de réalisation de l'invention,
- la figure 2 est une vue de dessus et à plus grande échelle, de la bague de la figure 1,
- la figure 3 est une vue de côté, selon la flèche III à la figure 2 et à la même échelle, de la bague et
- la figure 4 est une vue en perspective, à une autre échelle de la bague des figures 1 à 3, en configuration de pré-montage entre un écrou, un élément à maintenir serré et une tige filetée.

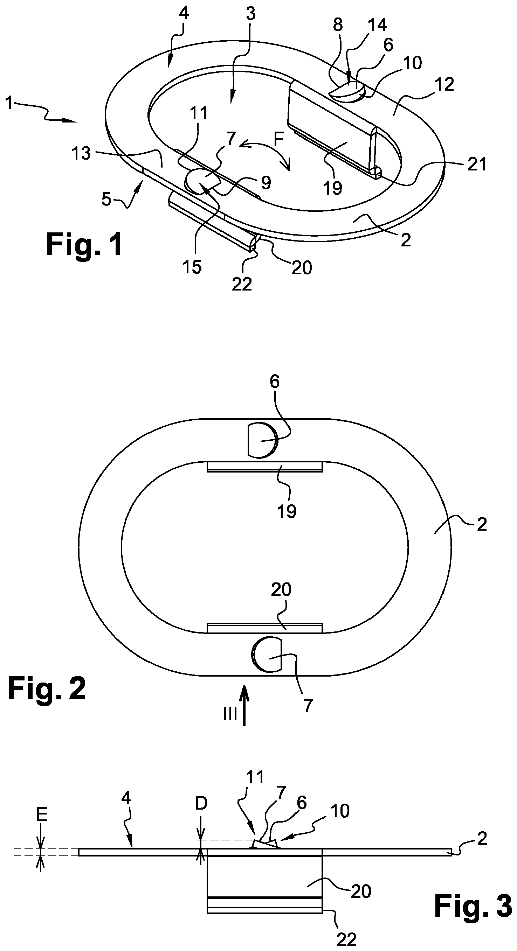

La figure 1 illustre une bague 1 conforme à un mode de réalisation de l'invention. En l'espèce, la bague 1 est oblongue, c'est-à-dire qu'elle s'inscrit globalement dans un rectangle aux angles arrondis. En variante, elle peut être d'une autre forme et/ou dimensions différentes pour autant qu'elle soit adaptée, en particulier son ouverture, à la configuration géométrique d'un orifice traversant ménagé dans un élément à maintenir serré contre au moins un autre élément ou une structure porteuse. Par la suite, on utilisera préférentiellement l'expression « élément à maintenir ». On conçoit que l'autre élément contre lequel est maintenu l'élément qui peut être différent. A titre de variante, la bague, ainsi que son ouverture, peut être rectangulaire, carrée. Il est également possible que la bague soit d'une forme générale différente de celle de son ouverture .

La bague 1 est réalisée en un matériau rigide et aisé à usiner. Avantageusement, la bague est en métal, par exemple en acier inoxydable, en aluminium ou en un autre métal adapté à l'environnement dans lequel sera placée la bague. En variante, elle est en polymère.

La bague 1, oblongue, a une longueur globalement comprise entre 10 mm et 50 mm sur une largeur globalement comprise entre 10 mm à 30 mm. La partie pleine 2 de la bague 1 a une largeur, en l'espèce régulière, comprise entre 2 mm et 5 mm, de manière préférée voisine de 3 mm. Ainsi, l'ouverture centrale 3, également non circulaire, en l'espèce de forme oblongue, a des dimensions telles qu'elle occupe la majeure partie de la bague. En l'espèce, l'ouverture 3 fait environ 20 mm par 12 mm pour une bague de longueur totale de 25 mm sur 18 mm de large.

Les deux faces 4, 5 de la partie pleine 2 de la bague 1 sont parallèles. Sur une première face 4, dite supérieure, destinée à être la plus près d'un écrou, donc la plus éloignée de l'élément à maintenir lorsque la bague 1 est en configuration d'utilisation, deux organes de maintien 6, 7 de l'écrou, selon un couple de serrage donné, sont ménagés.

Ces organes sont formés par deux pattes aplaties. Ces pattes 6, 7, en forme de trois quart de cercle dans l'exemple, sont réalisées par découpage dans le matériau constitutif de la partie pleine 2, à partir de la face supérieure 4. En variante, les pattes 6, 7 sont de forme différente, par exemple elles sont rectangulaires. De même les pattes 6, 7 peuvent être fixées à la partie pleine 2 de la bague 1 par d'autres techniques connues en soi, telles que le collage ou le soudage. Dans tous les cas, les pattes 6, 7 sont reliées à la partie pleine 2 par un seul bord 8, 9 et orientées angulairement par rapport à la face supérieure 4.

Une telle configuration permet de réaliser des pattes 6, 7 dont l'extrémité libre 10, 11 est déplaçable par rapport à la partie pleine 2 de la bague 1. De plus, les pattes 6, 7 sont pourvues d'une certaine élasticité. Il est ainsi aisé d'éloigner ou de rapprocher l'extrémité libre 10, 11 de chaque patte 6, 7 de la face supérieure 4 en éloignant ou en rabattant la patte par rapport à la face supérieure, comme illustré par la double flèche F. En d'autres termes, la distance D entre l'extrémité libre 10, 11 de chaque patte 6, 7 et la face supérieure 4 est modifiable.

Avantageusement, les pattes 6, 7 sont situées en regard l'une de l'autre sur les côtés 12, 13 parallèles, de plus grande longueur, de la partie pleine 2 de la bague 1. En variante, les pattes 6, 7 ne sont pas en regard l'une de l'autre. Dans tous les cas, la pente de la face visible inclinée 14, 15 d'une patte 6, 7 est orientée en sens inverse de la pente de la face visible inclinée 15, 14 de l'autre patte 7, 6.

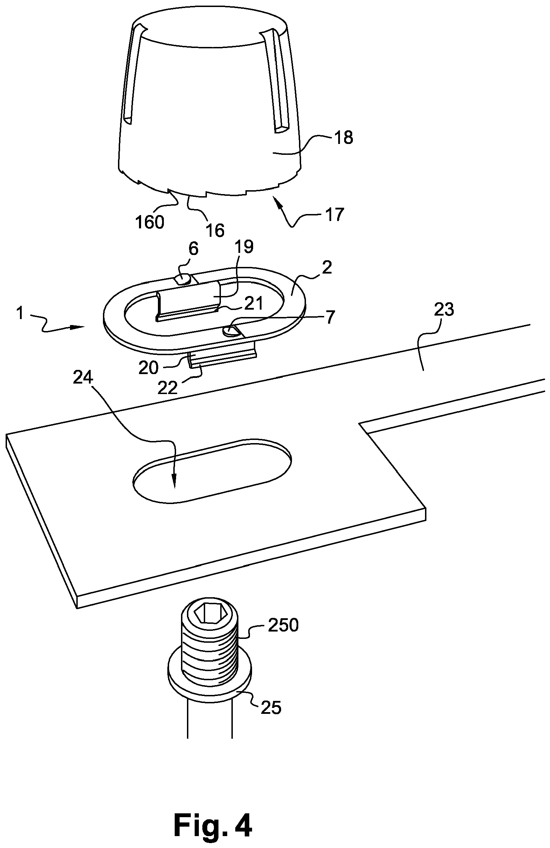

Comme cela apparait particulièrement à la figure 3, la distance D entre l'extrémité libre 10, 11 de chaque patte 6, 7 et la face supérieure 4 de la partie pleine 2 de la bague 1 est au moins égale à l'épaisseur E de la partie pleine 2 de la bague 1, du fait du mode de réalisation des pattes 6, 7 par découpage. Cette distance D correspond, dans tous les cas, à la profondeur d'un cran incliné 16 de configuration géométrique complémentaire, réalisé sur une face 17 d'un écrou 18, tels qu'illustrés à la figure 4.

La partie pleine 2 de la bague 1 comprend également sur la seconde face 5 de la bague, dite face inférieure et opposée à la face supérieure 4, au moins un organe de blocage en position de la bague 1 sur l'élément à maintenir. Cet organe de blocage comprend au moins un voile. Dans l'exemple décrit, il y a deux organes de blocage 19, 20. Ici, ces organes de blocage 19, 20 sont situés à l'aplomb des pattes 6, 7, qui se trouvent sur la face supérieure 4 opposée. En variante non illustrée, ils sont disposés ailleurs sur la face inférieure 5.

Ces organes 19, 20, ici en forme de voiles plans, sont fixés sur les côtés 12, 13. Le plan principal de chaque voile 19, 20 est orienté selon la longueur de la partie pleine 2, donc selon la dimension principale des côtés 12, 13. Les voiles 19, 20 sont parallèles entre eux et s'étendent verticalement vers l'extérieur à partir de la face inférieure 5 de la partie pleine 2 de la bague 1, donc perpendiculairement à celle-ci. Avantageusement, ils sont monoblocs avec la partie pleine 2. En variante, ils sont collés ou soudés sur cette dernière.

Les extrémités libres 21, 22 des voiles 19, 20 sont en forme de crochets, orientés vers l'extérieur de la bague 1. On conçoit aisément que les dimensions et/ou la forme des extrémités 21, 22 des voiles 19, 20 sont adaptées à la configuration géométrique des bords d'un orifice traversant ménagé dans un élément à maintenir et sur lequel la bague 1 est destinée à être montée.

Dans un mode de réalisation non illustré, les organes de blocage sont formés par un seul voile, continu, s'étendant en direction de l'élément à maintenir. Le voile définit alors une cheminée, de forme et de dimensions adaptées à celles de l'orifice de l'élément à maintenir. L'extrémité libre de cette cheminée est également configurée en crochet et orientée vers l'extérieur de la bague. On conçoit que, cet orifice étant non circulaire, la section transversale de la cheminée ainsi définie est également non circulaire. Une telle configuration optimise le blocage en rotation de la bague, non seulement par action des crochets mais également par les dimensions du voile.

En effet, les organes de blocage en position assurent, entre autres, le blocage en rotation de la bague. Aussi, lorsque cette dernière est montée sur un orifice d'un élément à maintenir serré, il convient d'adapter la forme et/ou la position des organes de maintien. En particulier, dans un autre mode de réalisation non illustré, quelle que soit la forme extérieure de la bague et de l'ouverture et lorsque l'ouverture de l'élément à maintenir est un orifice circulaire, les organes sont positionnés transversalement, dans un même plan ou non, selon la largeur de la partie pleine de la bague. Comme précédemment, ils s'étendent vers l'extérieur à partie de la face 5 de la bague. Ils ont alors des dimensions adaptées pour s'insérer dans des encoches ménagées dans le bord de l'orifice ménagé sur l'élément à maintenir.

L'utilisation de la bague 1 est maintenant décrite en faisant plus particulièrement référence à la figure 4, étant entendu que dans le mode réalisation évoqué précédemment, avec un seul voile, l'utilisation est similaire. Un élément à maintenir 23 est illustré, partiellement, sous la forme d'une patte pourvue d'un orifice traversant 24. Ici l'orifice 24 est oblong. Une telle patte 23 est, par exemple, formée par un bord plié d'une plaque métallique ou cassette que l'on veut fixer, de manière amovible, sur une structure porteuse, non illustrée. Bien entendu, l'élément à maintenir peut être destiné à être relié à un ou plusieurs autre(s) élément(s), identique(s) ou non, plutôt que fixer sur une structure porteuse.

La forme de l'orifice 24 permet de positionner précisément l'élément à maintenir 23 sur une structure porteuse donnée qui est pourvu d'un organe de maintien de l'élément 23. De facto, la forme de l'orifice 24 limite tout mouvement de translation et de rotation de la bague 1 en position sur l'orifice 24. Dans l'exemple, une tige 25 dont l'extrémité libre 250 est filetée forme ici l'organe de maintien. On conçoit que l'extrémité non représentée de la tige 25, opposée à l'extrémité 250, est rendue solidaire de la structure porteuse, par des techniques connues en soi.

Dans une première étape, on insère la bague 1 dans l'orifice traversant 24 de l'élément 23 en prenant soin d'orienter la face 5 de la partie pleine 2 de la bague 1 équipée des organes de blocage, à savoir les voiles 19, 20, en direction de la tige filetée 25. L'insertion s'effectue jusqu'au maintien, en force, par clipsage et coopération de formes des extrémités 21, 22 en crochet des voiles 19, 20 sur les bords 26, 27 de l'orifice 24. Les crochets 21, 22 sont alors en prise sur la face non visible de l'élément 23 opposée à celle recevant la bague 1. La configuration géométrique et les dimensions respectives de l'orifice 24 et de la bague 1 empêchent toute rotation ou translation de la bague 1 dans l'orifice 24.

Les crochets 21, 22 empêchent tout retrait accidentel de la bague 1, celle-ci définissant, de facto, une couronne autour de l'orifice 24, du côté de la face de l'élément 23 orientée vers le haut en regardant la figure 4, cela sans altérer l'espace délimité par l'orifice 24 pour le passage de l'extrémité 250 de la tige 25.

Après avoir introduit et positionné la tige 25 dans les orifices 3 et 24 positionnés coaxialement à l'issue de la mise en place de la bague 1 dans l'orifice 24 de l'élément 23, on visse un écrou 18 sur l'extrémité filetée 250 de la tige 25, à partir de la face supérieure 4 de la bague 1.

Comme cela apparaît à la figure 4, une face 17, circulaire, de l'écrou 18 est pourvue de plusieurs crans inclinés 16, régulièrement disposés en cercle sur la face 17. Les crans 16 sont tous inclinés dans le même sens.

Le serrage de l'écrou 18 sur l'extrémité filetée 250 est effectué, avantageusement, avec un couple de serrage prédéfini. Ce couple est adapté pour assurer le maintien de l'élément 23 sur la surface porteuse, sans altérer, déformer ou générer des contraintes mécaniques aux différents éléments constitutifs de la liaison par vissage.

Lors de ce serrage, les pattes 6, 7 sont en appui contre deux des crans 16 de la face 17 de l'écrou 18. L'inclinaison des crans 16 et des pattes 6, 7 est le même et orientée selon le sens du vissage, à savoir, dans l'exemple, selon le sens de rotation des aiguilles d'une montre. En d'autres termes, lors du vissage, les pattes 6, 7 ne s'opposent pas à ce mouvement. En revanche, lorsque l'on veut desserrer l'écrou 18, on induit un mouvement de rotation en sens inverse des aiguilles d'une montre qui met en contact l'extrémité libre 10, 11 de chaque patte 6, 7 avec le fond 160 des deux crans 16. Ainsi, les extrémités 10, 11 forment chacune une butée s'opposant à un mouvement de desserrage de l'écrou 18.

Les pattes 6, 7 opposent, de par leur élasticité, une force au mouvement de desserrage avec un couple suffisant pour éviter tout desserrage accidentel, par exemple sous l'effet de vibrations et/ou de dilatation thermique des pièces. En revanche, la force opposée par les pattes 6, 7 ne permet pas de s'opposer à un desserrage volontaire. En d'autres termes, la force opposée par les pattes 6, 7 au desserrage est globalement similaire au couple de serrage prédéterminé mais pas, ou du moins peu, supérieure, afin d'autoriser le dévissage de l'écrou 18. Le vissage de l'écrou 18 sur la tige filetée 25 reste donc réversible, ce qui permet si besoin de changer l'élément 23 après dévissage de l'écrou 18.

Lors d'un desserrage volontaire, le mouvement de rotation de l'écrou 18 induit un pliage des pattes 6, 7 dans le sens inverse de celui visant à rabattre les pattes 6, 7 en direction de leur découpe respective. En fonction de la résistance mécanique du matériau constitutif de la bague et/ou de l'épaisseur des pattes 6, 7, cela peut entrainer la rupture de la liaison entre les pattes 6, 7 et la partie pleine 2 de la bague. Il est donc possible de prévoir des bagues pouvant supporter un seul ou plusieurs dévissages en fonction des besoins.

En variante, le couple de serrage est effectué sous contrôle, à l'aide d'une clé dynamométrique.

On réalise ainsi un dispositif empêchant tout dévissage accidentel, avec un minimum de pièces, sans modifications substantielles des pièces à relier par vissage, cela en préservant le caractère réversible de la liaison.

## Revendications

1. Bague (1) anti-desserrage d'un écrou (18) propre à être intercalée entre un écrou (18) destiné à être vissé sur une tige filetée (25, 250) et un élément à maintenir (23) serré contre un autre élément ou une structure porteuse, ledit autre élément ou la structure porteuse étant solidaire de ladite tige filetée (25, 250), la partie pleine (2) de ladite bague (1) ayant une première face (4) destinée à être en contact avec l'écrou (18) et une seconde face (5) destinée à être en contact avec l'élément à maintenir (23), la première face (4) de la partie pleine (2) de la bague (1) étant pourvue de deux organes de maintien (6, 7) de l'écrou (18), en configuration vissée, selon un couple de serrage donné, disposés sur deux côtés (12, 13) de la partie pleine (2) de la bague (1), et la seconde face (5) de la partie pleine (2) de la bague (1) étant pourvue d'au moins un organe de blocage en position (19, 20) de la bague (1) sur l'élément à maintenir (23) ou la structure porteuse, l'ouverture (3) de la bague (1) étant de forme non circulaire et le au moins un organe de blocage en position de la bague (1) comprenant au moins un voile (19, 20) fixé sur un côté (12, 13), le plan principal de chaque voile (19, 20) étant orienté selon la longueur de la partie pleine (2), le voile (19, 20) s'étendant verticalement vers l'extérieur et perpendiculairement à la seconde face (5) en direction de l'élément à maintenir (23) ou de la structure porteuse **caractérisé en ce que** ledit au moins un voile (19, 20) est pourvu d'une extrémité libre configurée en crochet (21, 22).

2. Bague selon la revendication 1, **caractérisée en ce qu'**elle comprend deux organes de blocage en position de la bague (1) formés par deux voiles (19, 20) s'étendant en direction de l'élément à maintenir (23) ou de la structure porteuse.

3. Bague selon la revendication 2, **caractérisée en ce que** les voiles (19, 20) sont parallèles entre eux et s'étendent perpendiculairement à la seconde face (5) de la partie pleine (2) de la bague (1).

4. Bague selon la revendication 1, **caractérisée en ce que** le au moins un organe de blocage en position de la bague (1) est formé par un voile continu, définissant une cheminé et s'étendant en direction de l'élément à maintenir (23) ou de la structure porteuse.

5. Bague selon l'une des revendications 2 à 4, **caractérisée en ce que** le ou les crochet(s) (21, 22) du ou de chaque voile (19, 20) est ou sont orienté(s) vers l'extérieur de la bague (1).

6. Bague selon la revendication 1, **caractérisée en ce que** les organes de maintien sont formés par deux pattes (6,7), en regard l'une de l'autre, solidarisées par un bord (8, 9) à une face (4) de deux côtés (12, 13) parallèles de la partie pleine (2) de la bague (1).

7. Bague selon la revendication 6, **caractérisée en ce que** le bord (8,9) de la patte (6, 7) est monobloc avec la partie pleine (2) de la bague, la patte (6, 7) étant réalisée par découpage.

8. Bague selon la revendication 6, **caractérisée en ce que** la patte (6, 7) est rapportée, par exemple par collage ou soudage, sur la face (4) de la partie pleine (2) de la bague.

9. Bague selon l'une des revendications 6 à 8, **caractérisée en ce que** la distance (D) entre la face (4) de la partie pleine (2) de la bague (1) et l'extrémité libre (10, 11) de chaque patte (6, 7) est modifiable (F) par pliage de la patte (6, 7).

10. Bague selon la revendication 9, **caractérisée en ce que** la distance (D) entre la face (4) de la partie pleine (2) de la bague (1) et l'extrémité libre (10, 11) de chaque patte (6,7) correspond au moins à l'épaisseur (E) de la partie pleine (2) de la bague (1).

## Patentansprüche

1. Gegen Ablösung gesicherter Ring (1) für eine Mutter (18), der geeignet ist, um zwischen eine Mutter (18), die ausgelegt ist, um auf eine Gewindestange (25, 250) geschraubt zu werden, und ein Element (23), das festgezogen gegen ein anderes Element oder eine Tragestruktur gehalten werden soll, eingefügt zu sein, wobei das andere Element oder die Tragestruktur mit der Gewindestange (25, 250) fest verbunden ist, wobei der feste Teil (2) des Rings (1) eine erste Fläche (4) aufweist, die ausgelegt ist, um mit der Mutter (18) in Kontakt zu sein, und eine zweite Fläche (5), die ausgelegt ist, um mit dem zu haltenden Element (23) in Kontakt zu sein, wobei die erste Fläche (4) des festen Teils (2) des Rings (1) mit zwei Organen zum Halten (6, 7) der Mutter (18) in der festgezogenen Konfiguration gemäß einem bestimmten Festzugsdrehmoment ausgestattet ist, die auf beiden Seiten (12, 13) des festen Teils (2) des Rings (1) angeordnet sind, und wobei die zweite Fläche (5) des festen Teils (2) des Rings (1) mit mindestens einem Organ zur Positionsblockierung (19, 20) des Rings (1) auf dem zu haltenden Element (23) oder der Tragestruktur ausgestattet ist, wobei die Öffnung (3) des Rings (1) nicht kreisförmig ist und das mindestens eine Organ zur Positionsblockierung des Rings (1) mindestens eine Wand (19, 20) umfasst, die auf einer Seite (12, 13) fixiert ist, wobei die Hauptebene jeder Wand (19, 20) gemäß der Länge des festen Teils (2) ausgerichtet ist, wobei sich die Wand (19, 20) vertikal zur Außenseite hin und senkrecht zur zweiten Fläche (5) hin in Richtung des zu haltenden Elements (23) oder der Tragestruktur erstreckt, **dadurch gekennzeichnet, dass** die mindestens eine Wand (19, 20) mit einem freien Ende ausgestattet ist, das als Haken (21, 22) konfiguriert ist.

2. Ring nach Anspruch 1, **dadurch gekennzeichnet, dass** er zwei Organe zur Positionsblockierung des Rings (1) umfasst, die von zwei Wänden (19, 20) gebildet sind, die sich in Richtung des zu haltenden Elements (23) oder der Tragestruktur erstrecken.

3. Ring nach Anspruch 2, **dadurch gekennzeichnet, dass** die Wände (19, 20) parallel zueinander sind und sich senkrecht zur zweiten Seite (5) des festen Teils (2) des Rings (1) erstrecken.

4. Ring nach Anspruch 1, **dadurch gekennzeichnet, dass** das mindestens eine Organ zur Positionsblockierung des Rings (1) durch eine durchgehende Wand gebildet ist, die einen Schacht bildet und sich in Richtung des zu haltenden Elements (23) oder der Tragestruktur erstreckt.

5. Ring nach einem der Ansprüche 2 bis 4, **dadurch gekennzeichnet, dass** der oder die Haken (21, 22) der oder jeder Wand (19, 20) zur Außenseite des Rings (1) hin ausgerichtet ist oder sind.

6. Ring nach Anspruch 1, **dadurch gekennzeichnet, dass** die Halteorgane von zwei Füßen (6, 7) gebildet sind, die einander gegenüber liegen, die durch einen Rand (8, 9) mit einer Fläche (4) mit zwei Seiten (12, 13) fest verbunden sind, die parallel zum festen Teil (2) des Rings (1) sind.

7. Ring nach Anspruch 6, **dadurch gekennzeichnet, dass** der Rand (8, 9) des Fußes (6, 7) einstückig mit dem festen Teil (2) des Rings ist, wobei der Fuß (6, 7) durch Ausschneiden hergestellt ist.

8. Ring nach Anspruch 6, **dadurch gekennzeichnet, dass** der Fuß (6, 7) z. B. durch Kleben oder Schweißen auf die Fläche (4) des festen Teils (2) des Rings aufgesetzt ist.

9. Ring nach einem der Ansprüche 6 bis 8, **dadurch gekennzeichnet, dass** der Abstand (D) zwischen der Fläche (4) des festen Teils (2) des Rings (1) und dem freien Ende (10, 11) jedes Fußes (6, 7) durch Falten (F) des Fußes (6, 7) modifiziert werden kann.

10. Ring nach Anspruch 9, **dadurch gekennzeichnet, dass** der Abstand (D) zwischen der Fläche (4) des festen Teils (2) des Rings (1) und dem freien Ende (10, 11) jedes Fußes (6, 7) mindestens der Dicke (E) des festen Teils (2) des Rings (1) entspricht.

## Claims

1. An anti-loosening ring (1) for a nut (18), suitable for being inserted between a nut (18) intended to be screwed onto a threaded rod (25, 250) and an element (23) to be held in place clamped against another element or a bearing structure, said other element or bearing structure being rigidly attached to said threaded rod (25, 250), the solid portion (2) of said ring (1) having a first face (4) that is intended to be in contact with the nut (18) and a second face (5) that is intended to be in contact with the element (23) to be held in place, the first face (4) of the solid portion (2) of the ring (1) being provided with two members (6, 7) for holding the nut (18) in place, in screwed configuration, according to a given tightening torque, disposed on each side (12, 13) of the solid portion (2) of the ring (1) and the second face (5) of the solid portion (2) of the ring (1) being provided with at least one member (19, 20) for locking the ring (1) in position on the element (23) to be held in place or the bearing structure, the opening (3) in the ring (1) being non-circular in shape and the at least one member for locking the ring (1) in position comprising at least one web (19, 20) attached on one side (12,13), the main plane of each web (19, 20) being oriented along the length of the solid portion (2), the web (19, 20) extending vertically towards the outside and perpendicular to the second face (5) in the direction of the element (23) to be held in place or the bearing structure, **characterised in that** said at least one web (19, 20) is provided with a free end in the form of a hook (21, 22).

2. The ring according to claim 1, **characterised in that** it comprises two members for locking the ring (1) in position, formed by two webs (19, 20) extending in the direction of the element (23) to be held in place or the bearing structure.

3. The ring according to claim 2, **characterised in that** the webs (19, 20) are parallel to one another and extend perpendicular to the second face (5) of the solid portion (2) of the ring (1).

4. The ring according to claim 1, **characterised in that** at least one member for locking the ring (1) in position is formed by a continuous web, defining a shaft and extending in the direction of the element (23) to be held in place or the bearing structure.

5. The ring according to one of claims 2 to 4, **characterised in that** the hook or hooks (21, 22) of the or each web (19, 20) is or are oriented towards the outside of the ring (1).

6. The ring according to claim 1, **characterised in that** the holding members are formed by two lugs (6, 7), opposite one another, secured by one edge (8, 9) to a face (4) of two parallel sides (12, 13) of the solid portion (2) of the ring (1).

7. The ring according to claim 6, **characterised in that** the edge (8, 9) of the lug (6, 7) is formed integral with the solid portion (2) of the ring, the lug (6, 7) being produced by cutting.

8. The ring according to claim 6, **characterised in that** the lug (6, 7) is added, for example by gluing or welding, onto the face (4) of the solid portion (2) of the ring.

9. The ring according to one of claims 6 to 8, **characterised in that** the distance (D) between the face (4) of the solid portion (2) of the ring (1) and the free end (10, 11) of each lug (6, 7) can be modified (F) by bending the lug (6, 7).

10. The ring according to claim 9, **characterised in that** the distance (D) between the face (4) of the solid portion (2) of the ring (1) and the free end (10, 11) of each lug (6, 7) corresponds to at least the thickness (E) of the solid portion (2) of the ring (1).
